# EUROPÄISCHE PATENTANMELDUNG

(11) **EP 2 811 176 A1**
(43) Veröffentlichungstag der Anmeldung: **10.12.2014**
(21) Anmeldenummer: 13170304.3
(22) Anmeldetag: 03.06.2013
(51) Int. Cl.: F16B 5/01, F16B 5/02, B64G 1/22, B64G 1/66

(54) **Insert**

(71) Anmelder: High Performance Space Structure Systems GmbH, 81379 München (DE)
(72) Erfinder: Ihle, Alexander, 85375 Neufahrn bei Freising (DE); Proietti Zolla, Paolo, 81477 München (DE)
(74) Vertreter: Heim, Florian Andreas

(57) **Zusammenfassung**

Die Erfindung betrifft ein Insert (1, 100, 200, 300, 400) für Verbindungen zwischen zwei Körpern (71, 72) mit unterschiedlichen Wärmeausdehnungskoeffizienten. Das Insert weist einen Grundkörper (10, 110, 210, 310, 410) auf und eine in dem Grundkörper angeordnete Befestigungseinrichtung (20, 120, 220, 320, 420). Erfindungsgemäß ist das Insert dadurch weitergebildet, dass für die Verbindung zwischen dem Grundkörper und der Befestigungseinrichtung eine Verbindungseinrichtung (30, 130, 230, 330, 430) vorgesehen ist, welche in eine erste Raumrichtung auslenkbar ausgebildet ist. Bei Auslenkung wird auch die Befestigungseinrichtung durch die Verbindungseinrichtung in dieselbe Raumrichtung bewegt.

## Beschreibung

Die Erfindung betrifft ein Insert für Verbindungen zwischen zwei Körpern mit unterschiedlichen Wärmeausdehnungskoeffizienten mit einem hülsenartigen Grundkörper, welcher eine Mittelachse in einem Innenraum aufweist. Außerdem ist eine Befestigungseinrichtung, beispielsweise ein Gewinde vorgesehen, welches mit dem Grundkörper verbunden ist.

Im kommerziellen wie nicht-kommerziellen Satellitenbau ist es bekannt, Satelliten aus einer Grundstruktur, die ähnlich einer großen Box oder eines Quaders geformt ist, aufzubauen. Innen und außen an dieser Grundstruktur werden die entsprechenden Nutzlasten befestigt. Für die notwendige Elektronik werden hierzu quasi standardisierte Elektronikboxen eingesetzt. Diese Boxen sind beziehungsweise werden zum Beispiel nach ESA Standards (ECSS) für Raumfahrtanwendungen qualifiziert und bestehen größtenteils aus Aluminium. Meist weisen sie auf einer Seite einen Flansch auf, welcher Befestigungslöcher besitzt.

Die Grundstruktur des Satelliten ist herkömmlicherweise ebenfalls bevorzugt aus Aluminium oder Titan aufgebaut. Über die Löcher in dem Befestigungsflansch der Elektronikboxen und entsprechende Gegenstücke in der Grundstruktur werden die Elektronikboxen beispielsweise mittels Schrauben an der Grundstruktur befestigt.

Eine Weiterentwicklung im Satellitenbau ist es, die Grundstruktur oder zumindest Teile davon aus Sandwich-Materialien und/oder CFK-Strukturen herzustellen. Hiermit soll insbesondere eine Gewichtsersparnis erreicht werden. Einzelne Seitenflächen der Grundstruktur werden auch auf englisch als "Panel" bezeichnet.

Um die bekannten Elektronikboxen an beispielsweise aus CFK - kohlenstofffaserverstärkter Kunststoff - gefertigten Panels zu befestigen, weisen die CFK-Panels Inserts auf. Mittels Schrauben oder Muttern können so die Elektronikgehäuse an den Panels befestigt werden.

Problematisch hierbei sind jedoch die Rahmenbedingungen, die beim Satellitenbau berücksichtigt werden müssen. Dies betrifft insbesondere die auftretenden Startlasten und die Betriebsumgebung im All.

Bei gängigen Satellitenstarts mittels Raketen treten Kräfte von bis zu 60 g auf, welchen die Befestigungen zwischen der Elektronikbox und dem Panel standhalten müssen. Die Belastungen treten hierbei in allen drei Raumrichtungen sowie auch rotativ um diese Raumrichtungen auf. Zusätzlich treten beim Raketenstart auch akustische Lasten auf, die zu starken Vibrationen innerhalb der Rakete und somit auch am Satelliten führen. Die Folge ist, dass die Verbindungen sehr stabil ausgelegt werden müssen. Derartige Elektronik- oder Elektroboxen weisen abhängig von der Bestückung und der Größe ein Gewicht zwischen 1 kg bis 50 kg auf.

Ein wesentlicher Parameter, der beim Betrieb im All zu berücksichtigen ist, sind unterschiedliche Wärmeausdehnungskoeffizienten unterschiedlicher Materialien. An der Außenseite des Satelliten herrschen z.B. Temperaturen von -170°C bis zu +180°C. Im Inneren des Satelliten sind je nach Bauweise Temperaturunterschiede zwischen z.B. -80°C und +50°C zu erwarten. Aus diesen großen Temperaturunterschieden ergeben sich bei der Verwendung von quasi standardisierten Elektronikboxen aus Aluminium, Titan- oder Stahllegierungen und CFK-Panels Probleme aufgrund der unterschiedlichen Wärmeausdehnungskoeffizienten dieser Materialien. Beispielsweise hat Aluminium einen Wärmeausdehnungskoeffizienten von ca. 24x10⁻⁶ 1/K, während CFK-Strukturen einen Wärmeausdehnungskoeffizienten von ca. -0,3x10⁻⁶ 1/K aufweisen. Dies bedeutet, dass bei einer angenommenen Kantenlänge eines Elektronikgehäuses aus Aluminium von 30 cm und einer Temperaturänderung von ±100°C mit einer positiven wie negativen Ausdehnung von ca. ±0,72 mm gerechnet werden muss. Im Gegensatz dazu dehnt/kontrahiert sich eine CFK-Struktur bedingt durch den sehr geringen Wärmeausdehnungskoeffizienten kaum.

Um dennoch eine Verbindung zwischen einer Elektronikbox und einer CFK-Struktur herzustellen, sind verschiedene Möglichkeiten wie Gleitlager oder die Befestigung mit Langlöchern bekannt. Problematisch ist hierbei jedoch, dass die Gleiteigenschaften von Gleitlagern beziehungsweise Gleitflächen im Wesentlichen von der Luftfeuchtigkeit abhängen. Die Luftfeuchtigkeit ist im Einsatzbereich eines Satelliten im Weltall nahe Null und daher sind die Gleiteigenschaften der Materialien äußerst schlecht. Grundsätzlich könnten die Materialien jedoch entsprechend dimensioniert werden, so dass auch im Weltraum ausreichend große Gleiteigenschaften vorhanden sind. Dann tritt allerdings das Problem auf, dass beim Start auf der Erde die Gleiteigenschaften viel zu hoch sind, da hier eine viel höhere Luftfeuchtigkeit herrscht. Mit anderen Worten ist bei für den Weltraum dimensionierten Gleitlagern beim Start des Transportsystems die Gleitreibung zu gering.

Um diese Problematik zu überwinden, sind Anbauteile bekannt, die an dem CFK-Panel befestigt werden können und an die wiederum mittels weiterer Adapter die Elektronikboxen angebracht werden können. Diese Anbauteile weisen jedoch den Nachteil auf, dass somit zusätzliche Bauteile benötigt werden, welche sich beim Satellitenstart als zusätzliches Gewicht auswirken. Außerdem benötigen sie ebenfalls Platz an der Oberfläche des Satelliten, so dass insgesamt weniger Platz für Nutzlast zur Verfügung steht.

Der Erfindung liegt daher die **Aufgabe** zugrunde, ein Insert für die Verbindung zwischen zwei Körpern mit unterschiedlichen Wärmeausdehnungskoeffizienten anzugeben, welches im Satellitenbau verwendet werden kann und sowohl die notwendige Festigkeit als auch die notwendige Flexibilität aufweist.

Diese Aufgabe wird erfindungsgemäß durch ein Insert mit den Merkmalen des Anspruchs 1 gelöst.

Weitere vorteilhafte Ausführungen sind in den abhängigen Ansprüchen, der Beschreibung sowie den Figuren und deren Beschreibung angegeben.

Entsprechend Anspruch 1 ist ein gattungsgemäßes Insert dadurch weitergebildet, dass die Verbindung zwischen dem Grundkörper und der Befestigungseinrichtung mittels einer zumindest teilweise innerhalb des Grundkörpers angeordneten Verbindungseinrichtung ausgebildet ist und dass die Verbindungseinrichtung mittels einer definierten Minimalkraft in eine erste Raumrichtung auslenkbar ist. Hierbei verläuft die erste Raumrichtung im Wesentlichen senkrecht zur Mittelachse des Grundkörpers. Ferner ist vorgesehen, dass die Befestigungseinrichtung beim Auslenken der Verbindungseinrichtung in die erste Raumrichtung bewegbar ist.

Ein Grundgedanke der Erfindung kann darin gesehen werden, das Insert im Gegensatz zu herkömmlichen Inserts nicht massiv auszulegen. Mit anderen Worten hat das Insert einen Grundkörper, welcher mit dem umgebenden Material verbunden ist. Beispielsweise kann es mit einer CFK-Struktur eines Panels verklebt sein. Es kann also in ein Panel eingebettet werden. Zusätzlich weist das erfindungsgemäße Insert eine Befestigungseinrichtung auf, mit der ein zu befestigendes Objekt, beispielsweise ein Elektronikgehäuse, mit dem Insert verbunden werden kann und somit an diesem befestigt wird. Die Befestigungseinrichtung ist mittels einer Verbindungseinrichtung an dem Grundkörper des Inserts befestigt. Somit besteht eine Verbindung von dem zu befestigenden Objekt über die Befestigungseinrichtung, die Verbindungseinrichtung und dem Grundkörper zu dem Panel.

Des Weiteren wurde erkannt, dass - um die möglichen Kräfte die durch unterschiedliche Wärmeausdehnungskoeffizienten auftreten - ausgleichen zu können, die Verbindungseinrichtung in einem definierten Maß flexibel, also beispielsweise verformbar oder auslenkbar ausgebildet sein kann. Im Zusammenhang mit den anderen erfindungsgemäßen Merkmalen des Inserts ist es möglich, dass sich die Befestigungseinrichtung aufgrund einer Längenänderung des an ihr befestigten Objektes, wie ein Elektronikgehäuse, innerhalb des Inserts in die erste Raumrichtung bewegt. Dennoch verbleibt eine ausreichende Stabilität durch die Verbindungseinrichtung mit dem Grundkörper, so dass eine ausreichende Verbindung der Elektronikbox mit dem Panel für die Startlasten vorhanden ist. Im Sinne der Erfindung kann unter Kraft oder Minimalkraft insbesondere die Kraft verstanden werden, welche durch eine Längenänderung eines der befestigten Objekte an dem Insert angreift.

Anders ausgedrückt ist das erfindungsgemäße Insert, detaillierter die Verbindungseinrichtung, derart ausgelegt, dass es die durch die unterschiedlichen Wärmeausdehnungskoeffizienten im Weltraumbetrieb auftretenden Längenunterschiede ausgleichen kann. Dieses Ausgleichen wird zumindest teilweise durch ein Auslenken der Verbindungseinrichtung bezüglich des Grundkörpers realisiert.

Ein weiterer Grundgedanke kann darin gesehen werden, die entsprechenden Ausgleichseinrichtungen, wie im Fall der Erfindung die Verbindungseinrichtung, zumindest teilweise innerhalb des Grundkörpers des Inserts anzuordnen. Hierdurch wird kein zusätzlicher Platz beim Satellitenbau für die Befestigung eines zu befestigenden Objektes, wie einer Elektronikbox, an einem Panel benötigt. Auch bietet sich der Vorteil, dass somit Befestigungsmethoden, wie sie für herkömmliche unflexible Inserts verwendet werden, auch für das erfindungsgemäße Insert eingesetzt werden können. Eine andere Bezeichnung für Insert ist auch Gewindeeinsatz. Allgemein kann als Insert im Rahmen der Erfindung ein Einsatz in ein Material, insbesondere ein Sandwich-, Mehrschicht- oder CFK-Material, bezeichnet werden, welches mit diesem Material fest verbunden, zum Beispiel eingeklebt oder einlaminiert, ist und eine Befestigungsmöglichkeit für ein Objekt, wie eine Elektronikbox, bieten kann.

Die Verbindungseinrichtung kann beispielsweise aus einem biegeweichen Material ausgebildet sein. Abhängig von der Materialdicke ist es so möglich, die Verbindungseinrichtung derart auszubilden, dass sie in eine Raumrichtung auslenkbar, in die andere jedoch im Wesentlichen starr ist.

Vorteilhaft ist es, wenn die Befestigungseinrichtung eine durchgehende Hülse, ein Außengewinde oder ein Innengewinde aufweist. Ferner ist es bevorzugt, wenn die entsprechende Mittelachse der Hülse oder des Gewindes parallel oder koaxial zu der Mittelachse des Grundkörpers ausgerichtet ist. Grundsätzlich sind aber auch andere Befestigungseinrichtungen möglich, mit denen ein zu befestigendes Element, beispielsweise eine qualifizierte Elektronikbox, welche einen Flansch aufweist, an einem Panel befestigt werden kann. Im Falle einer durchgehenden Hülse, welche auch als durchgehendes Loch bezeichnet werden kann, kann der Flansch einer Elektronikbox beispielsweise mittels eines Bolzen oder einer langen Schraube, welche durch das Panel hindurchragt, mittels zweier Muttern befestigt werden. Bei einer Ausführungsform der Befestigungseinrichtung mit Außengewinde kann dieses aus dem Insert herausstehen, so dass der Flansch einer Elektronikbox über das Außengewinde an einem vorgesehenen Loch gesetzt werden kann und wiederum mittels einer Mutter an dem Außengewinde und somit dem Insert befestigt werden kann. In ähnlicher Weise kann auch die Befestigung bei der Ausbildung der Befestigungseinrichtung mit einem Innengwinde ausgeführt sein. In diesem Fall reicht eine Schraube, welche durch eine Bohrung im Flansch einer Elektronikbox in das Innengewinde greift, aus, um die Elektronikbox an dem Insert und somit dem Panel zu befestigen.

Bevorzugt ist es, wenn die Verbindungseinrichtung länglich mit einem ersten und einem zweiten Ende ausgebildet ist, und die Verbindungseinrichtung mit ihrem ersten Ende in einem unteren Bereich des Grundkörpers mit diesem verbunden ist. Von diesem unteren Bereich kann sich die Verbindungseinrichtung bis zu einem oberen Bereich im Innenraum des Grundkörpers erstrecken, wobei in diesem oberen Bereich des Innenraumes des Grundkörpers das zweite Ende der Verbindungseinrichtung vorgesehen ist. Mit anderen Worten ist die Verbindungseinrichtung im unteren Bereich des Insertinnenraums mit dem Grundkörper verbunden und erstreckt sich durch den Innenraum des hülsenartigen Grundkörper nach oben.

Hierbei ist es bevorzugt, wenn sich die Verbindungseinrichtung berührungslos im Innenraum des Grundkörpers von dessen unteren Bereich parallel oder koaxial zur Mittelachse nach oben erstreckt. Dadurch, dass keine Berührungen zwischen der Verbindungseinrichtung und dem Grundkörper bis auf die untere Befestigung vorliegen, ist es möglich, dass sich die Verbindungseinrichtung innerhalb des Innenraums des Grundkörpers bewegt beziehungsweise verbiegt. Durch diese Bewegung oder Verbiegung, die im Rahmen der Erfindung auch als Auslenkung bezeichnet wird, können Längenausdehnungen sowohl in positiver als auch in negativer Richtung eines befestigten Objektes, beispielsweise einer Elektronikbox, ausgeglichen werden.

Vorteilhaft ist es, wenn an dem zweiten Ende der Verbindungseinrichtung, welche sich im oberen Bereich des Innenraums des Inserts befindet, die Befestigungseinrichtung ausgebildet ist. Hierbei kann es sich zum Beispiel um ein Innen- oder Außengewinde handeln. Bei der Verwendung eines Innengewindes weist die Befestigungseinrichtung eine Hülse auf, in die ein Innengewinde eingeschnitten ist. Bei der Verwendung eines Außengewindes steht die Befestigungseinrichtung bevorzugt etwas aus dem Insert hervor und ist in der Art eines Bolzens ausgeführt, in den ein Außengewinde eingeschnitten ist.

Unabhängig davon ist es wesentlich für die Erfindung, dass die Bewegungen, welche von dem befestigten Objekt aufgenommen werden sollen, über die Befestigungseinrichtung jeweils auf die Verbindungseinrichtung übertragen werden und von dieser ausgeglichen werden.

Vorteilhafterweise weist die Verbindungseinrichtung eine plattenartige längliche Form auf. Durch diese Konstruktion liegt die erste Raumrichtung, in der die Verbindungseinrichtung auslenkbar ist, etwa senkrecht zu den Seitenflächen der Verbindungseinrichtung selbst. Es ist also möglich, dass sich die Verbindungseinrichtung in Richtung der Normalen der Seitenflächen verbiegen beziehungsweise auslenken kann. In die im 90° Winkel sowohl zur ersten Raumrichtung als auch zur Mittelachse verlaufende zweite Raumrichtung bietet die Verbindungseinrichtung jedoch eine hohe Stabilität an. Hierdurch können Kräfte in diese Richtung, die von dem befestigten Objekt ausgehen, gut in das das Insert umgebende Panel abgeleitet werden. Dies kann dazu verwendet werden, beim Start einer Rakete, die den Satelliten befördert, entstehende Kräfte von einer Elektronikbox auf die Grundstruktur, die das Panel aufweist, zu übertragen.

In einer weiteren Ausgestaltung ist die Verbindungseinrichtung stegartig zwischen der Befestigungseinrichtung und einer Innenfläche des Grundkörpers des Inserts ausgebildet. Diese stegartige Verbindungseinrichtung kann in beliebiger Art und Weise von der Innenfläche des Grundkörpers zu der Befestigungseinrichtung hin verlaufen. Beispielsweise ist eine spiralartige Form, eine gewundene Form oder auch eine gerade Form denkbar. Die Wahl der entsprechenden Form kann abhängig von den zu erwartenden Kräften beim Start des Satelliten als auch von den zu erwartenden Kräften, welche durch die Ausdehnung des befestigten Objektes, beispielsweise der Elektronikbox, entstehen, gewählt werden.

In einer vorteilhaften Ausführungsform weist die Verbindungseinrichtung zwei im Wesentlichen parallel laufende gerade Stege auf, wobei die Befestigungseinrichtung zwischen den beiden Stegen vorgesehen ist. Eine derartige Konstruktion mit zwei geraden und im Wesentlichen parallelen Stegen hat den Vorteil, dass auftretende rotative Kräfte, beispielsweise beim Anziehen einer Befestigungsschraube, in die Befestigungseinrichtung gut aufgenommen werden können. Grundsätzlich ist aber auch eine Ausführung mit einem Steg oder mehreren Stegen möglich.

Die Stege der Verbindungseinrichtung können sich auch von einer Seite der Innenfläche lediglich bis zur Befestigungseinrichtung erstrecken. Es ist jedoch ebenso möglich, dass sich die Stege der Verbindungseinrichtung von einer Seite der Innenfläche des Grundkörpers bis zu einer gegenüberliegenden Seite erstrecken. Hierbei kann beispielsweise bei zwei parallel verlaufenden Stegen die Befestigungseinrichtung wiederum zwischen den beiden Stegen vorgesehen sein. Diese Konstruktion bietet eine gute Festigkeit in Bezug auf Rotationsbewegungen, die auf die Befestigungseinrichtung einwirken. Sie hat aber auch Vorteile in Bezug auf die Festigkeit des Inserts in die Raumrichtung, in die keine Auslenkung der Verbindungseinrichtung beziehungsweise Bewegung oder Verschiebung der Befestigungseinrichtung stattfinden soll.

Vorteilhaft ist es, wenn sich die Verbindungseinrichtung von einer Innenfläche des Grundkörpers zur Befestigungseinrichtung in eine zweite Raumrichtung erstreckt, wobei die zweite Raumrichtung etwa senkrecht zur Mittelachse verläuft und die erste Raumrichtung etwa senkrecht zur zweiten Raumrichtung vorgesehen ist. Mit anderen Worten erstreckt sich die Befestigungseinrichtung im Wesentlichen im rechten Winkel zur ersten Raumrichtung und zur Raumrichtung der Mittelachse. In diese zweite Raumrichtung soll die Befestigungseinrichtung keine Bewegung oder Verschiebung in Bezug auf den Grundkörper des Inserts erfahren. Im Gegensatz dazu kann die Befestigungseinrichtung jedoch in die erste Raumrichtung verschoben werden, um die im Weltall vorhandene Ausdehnung aufgrund der unterschiedlichen Ausdehnungskoeffizienten aufzufangen. Diese Verschiebung wird über die erfindungsgemäße konstruierte Verbindungseinrichtung realisiert.

Es ist auch möglich, das Insert derart auszulegen, dass die Befestigungseinrichtung nicht nur in eine erste Raumrichtung beweglich, sondern auch in die zweite hierzu senkrecht verlaufende Raumrichtung beweglich ist. Dies kann beispielsweise derart realisiert werden, dass die Verbindungseinrichtung zwei Bereiche aufweist. Hierbei erstreckt sich ein erster Bereich der Verbindungseinrichtung von einer Innenfläche des Grundkörpers in den Innenraum in Richtung der zweiten Raumrichtung. Der erste Bereich der Verbindungseinrichtung ist in die erste Raumrichtung aus- oder ablenkbar. Dem gegenüber erstreckt sich ein zweiter Bereich der Verbindungseinrichtung von dem ersten Bereich der Verbindungseinrichtung zur Befestigungseinrichtung in Richtung der ersten Raumrichtung. Dieser ist in die zweite Raumrichtung auslenkbar. Im Ergebnis wird dadurch erreicht, dass eine Verschiebung der Befestigungseinrichtung in die erste Raumrichtung durch ein Auslenken des ersten Bereichs der Verbindungseinrichtung und eine Verschiebung der Befestigungseinrichtung in die zweite Raumrichtung durch ein Auslenken des zweiten Bereichs der Verbindungseinrichtung ermöglicht wird.

Bevorzugt wird eine derartige Konstruktion zusammen mit Inserts verwendet, die Befestigungseinrichtungen besitzen, die zumindest in eine Raumrichtung keine Verschiebung oder Bewegung zulassen. Über diese Inserts werden beim Start der Rakete zur Beförderung des Satelliten die auftretenden Kräfte in das Panel geleitet.

Bevorzugt ist es, wenn die Befestigungseinrichtung aus dem Grundkörper hervorstehend ausgebildet ist. Hierbei kann sie in Form eines Bolzens vorgesehen sein, der beispielsweise ein eingeschnittenes Außengewinde aufweist.

Wird ein zu befestigender Körper mittels der erfindungsgemäßen Inserts an einem Panel befestigt, so ist es notwendig, dass der zu befestigende Körper, beispielsweise eine Elektronikbox, nicht direkt auf dem Panel zum Liegen kommt, da anderenfalls eventuelle Wärmeausdehnungen in positiver wie auch in negativer Richtung nicht nur über die Inserts auf das Panel übertragen werden beziehungsweise von den Inserts aufgefangen werden können, sondern auch direkt über die beiden kontaktierenden Flächen übertragen werden könnten. Dies sollte verhindert werden, da die hierbei auftretenden Kräfte schwer vorherzusagen sind und somit die exakte Auslegung eines Panels an dieser Stelle äußerst schwierig ist.

Um einen Minimalabstand zwischen dem zu befestigenden Objekt und dem Panel zu erreichen, können Abstandsscheiben verwendet werden. Eine andere Möglichkeit ist es, an der Befestigungseinrichtung eine Stufe vorzusehen, welche einen Anschlag ausbildet. Dieser Anschlag definiert einen Abstand zwischen der oberen Fläche des Grundkörpers und der Stufe in axialer Richtung der Mittelachse. Hierbei wird angenommen, dass die Oberfläche des Grundkörpers plan mit der Oberfläche des Panels abschließt. Die Stufe definiert also einen minimalen Abstand zwischen einem montierten zu befestigenden Objekt und der Oberfläche des Panels. Hierbei ist es bevorzugt, dass die Stufe so dimensioniert ist, dass ein Flansch mit einem Loch auf ein vorstehende Befestigungseinrichtung aufgesetzt werden kann. Die Stufe verhindert jedoch, dass sich der Flansch und damit das Elektronikgehäuse bis zur Oberfläche des Grundkörpers und des Panels erstreckt.

Die erfindungsgemäßen Inserts können beispielsweise in CFK-Panels oder anderen Verbundmaterialpanels für den Satellitenbau verwendet werden. Sie sind auch in Panels in Sandwichbauweise einsetzbar. Auch ist es möglich, die Inserts selbst in monolithisch ausgebildeten Panels aus beispielsweise Aluminium vorzusehen, wenn damit eine CFK-Box an dem Panel befestigt werden soll. Wesentlich für den Anwendungsbereich der erfindungsgemäßen Inserts ist es, dass sie zur Befestigung von einem Objekt aus einem ersten Material an ein Objekt aus einem anderen Material verwendet werden, wobei das erste und das zweite Material wesentlich unterschiedliche Ausdehnungskoeffizienten haben.

In einer weiteren Ausgestaltung der Erfindung kann der Innenraum auch zumindest teilweise mit einem Material gefüllt sein, welches komprimierbar ist. Hierdurch können die Auslenkeigenschaften, wie die Dämpfung oder Steifigkeitseigenschaften, der Verbindungseinrichtung beeinflusst werden. Bei einer derartigen Ausführung ist berührungslos derart zu verstehen, dass die Verbindungseinrichtung bis auf eine fußartige Befestigung im Wesentlichen nur Kontakt zum Füllmaterial und nicht zum Grundkörper hat.

Die Erfindung wird nachfolgend anhand von Ausführungsbeispielen und schematischen Zeichnungen näher erläutert. In diesen Zeichnungen zeigen:
- Fig. 1 :: eine perspektivische Ansicht einer Verbindungseinrichtung und einer Befestigungseinrichtung eines erfindungsgemäßen Inserts;
- Fig. 2 :: eine Schnittansicht eines erfindungsgemäßen Inserts;
- Fig. 3 :: eine perspektivisch geschnittene Ansicht eines Panels mit Elektronikbox, welche mittels eines erfindungsgemäßen Inserts nach Fig. 2 befestigt ist;
- Fig. 4 :: eine Schnittansicht der Darstellung nach Fig. 3;
- Fig. 5 :: eine Schnittansicht der Darstellung nach Fig. 3;
- Fig. 6 :: eine Aufsicht auf ein erfindungsgemäßes Insert;
- Fig. 7 :: eine perspektivische Ansicht des Inserts nach Fig. 6;
- Fig. 8 :: eine perspektivisch geschnittene Ansicht eines Panels mit Elektronikbox, welche mittels eines erfindungsgemäßen Inserts nach Figuren 6 und 7 befestigt ist;
- Fig. 9 :: eine Schnittansicht der Darstellung nach Fig. 8;
- Fig. 10 :: eine Schnittansicht der Darstellung nach Fig. 8;
- Fig. 11 :: eine Aufsicht auf ein erfindungsgemäßes Insert;
- Fig. 12 :: eine perspektivische Ansicht des Inserts nach Fig. 11;
- Fig. 13 :: eine Aufsicht eines erfindungsgemäßen Inserts;
- Fig. 14 :: eine perspektivische Ansicht des Inserts nach Fig. 13;
- Fig. 15 :: eine Aufsicht auf ein erfindungsgemäßes Insert;
- Fig. 16 :: eine perspektivische Ansicht des Inserts aus Fig. 15; und
- Fig. 17 :: eine Skizze zur Befestigungsauslegung eines Objektes mit erfindungsgemäßen Inserts.

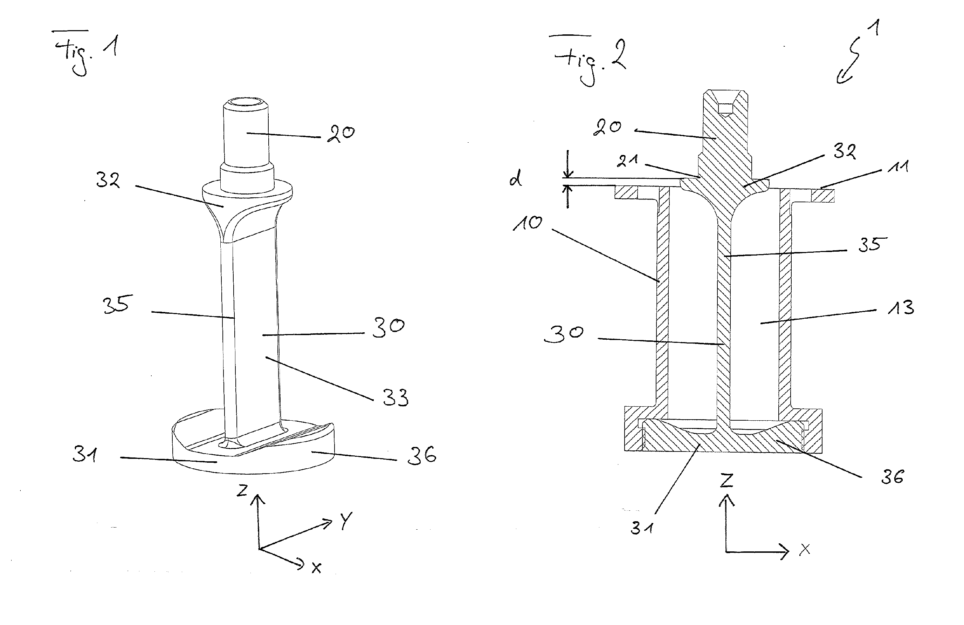

Fig. 1 zeigt eine Verbindungseinrichtung 30 und eine Befestigungseinrichtung 20 einer ersten Ausführungsform eines erfindungsgemäßen Inserts 1. Dieses Insert 1 ist in einer Schnittansicht in Fig. 2 ebenfalls dargestellt.

Die Verbindungseinrichtung 30 besteht aus einem plattenähnlichen länglichen Mittelstück 35. Am unteren, ersten Ende 31 der Verbindungseinrichtung 30 geht das Mittelstück 35 in einen Fuß 36 über. Am oberen, zweiten Ende 32 der Verbindungseinrichtung 30 befindet sich die Befestigungseinrichtung 20, welche hier als Außengewinde ausgebildet ist, wobei das Gewinde aus Gründen der Übersichtlichkeit nicht dargestellt ist.

Im Bereich des Fußes 36 ist die Verbindungseinrichtung 30 mit einem Grundkörper 10 des erfindungsgemäßen Inserts 1 verbunden. In der hier dargestellten Ausführungsform ist das erfindungsgemäße Insert 1 zweistückig ausgebildet. Es kann jedoch auch einstückig ausgebildet sein.

Im Verbindungsbereich zwischen der Verbindungseinrichtung 30 und der Befestigungseinrichtung 20 ist eine Stufe 21 ausgebildet. Diese dient dazu, ein auf die Befestigungseinrichtung 20 aufgesetztes, zu befestigendes Objekt von einer oberen Fläche 11 des Grundkörpers 10 beabstandet zu fixieren. In der hier ausgeführten Ausführungsform des erfindungsgemäßen Inserts 1 ist dies derart realisiert, dass sich die Stufe 21 oberhalb der Oberfläche 11 des Grundkörpers 10 befindet. Hierdurch wird ein Abstand d zwischen der Stufe 21 und der Oberfläche 11 ausgebildet. Dieser Abstand definiert dann den Abstand, den die Unterfläche des zu befestigenden Objektes zu der Oberfläche 11 einnimmt.

Das erfindungsgemäße Insert lässt eine Ausgleichsbewegung in x-Richtung zu, welche senkrecht zu einer Seitenfläche 33 des Mittelstückes 35 verläuft. In y-Richtung werden die auf die Befestigungseinrichtung 20 einwirkenden Kräfte auf die Verbindungseinrichtung 30 übertragen, die sich in y-Richtung nicht verformt. Daher werden die Kräfte weiter auf den Grundkörper 10 des Inserts 1 geleitet. Meist sind die erfindungsgemäßen Inserts 1 in ein Panel eingebettet beziehungsweise eingeklebt. Dies bedeutet, dass die auf den Grundkörper 10 wirkenden Kräfte in y-Richtung demnach in das Panel weitergeleitet werden.

Das unterschiedliche Verhalten des erfindungsgemäßen Inserts bei Kräften aus der x-Richtung und der y-Richtung wird durch die längliche plattenartigen Ausbildung des Mittelstückes 35 der Verbindungseinrichtung 30 erreicht. In y-Richtung weist das Mittelstück 35 eine viel höhere Materialstärke als in x-Richtung auf. Daher verformt es sich bei einer Krafteinwirkung auf die Befestigungseinrichtung 20 in y-Richtung nicht oder nur kaum. Dem gegenüber wird bei einer Krafteinwirkung auf die Befestigungseinrichtung 20 in x-Richtung das Mittelstück 35 in die Richtung der Kraft ausgelenkt. Mit anderen Worten wird mittels der Kombination Befestigungseinrichtung 20 und Verbindungseinrichtung 30 ermöglicht, der Kraft zumindest teilweise nachzugeben, indem die Kombination in die Richtung der Kraft ausweicht.

Kräfte, die auf die Befestigungseinrichtung 20 des erfindungsgemäßen Inserts 1 in z-Richtung einwirken, werden direkt über die Verbindungseinrichtung 30 an den Grundkörper 10 und über ihn in das das Insert 1 umgebende Material - beispielsweise ein CFK-Panel - weitergeleitet.

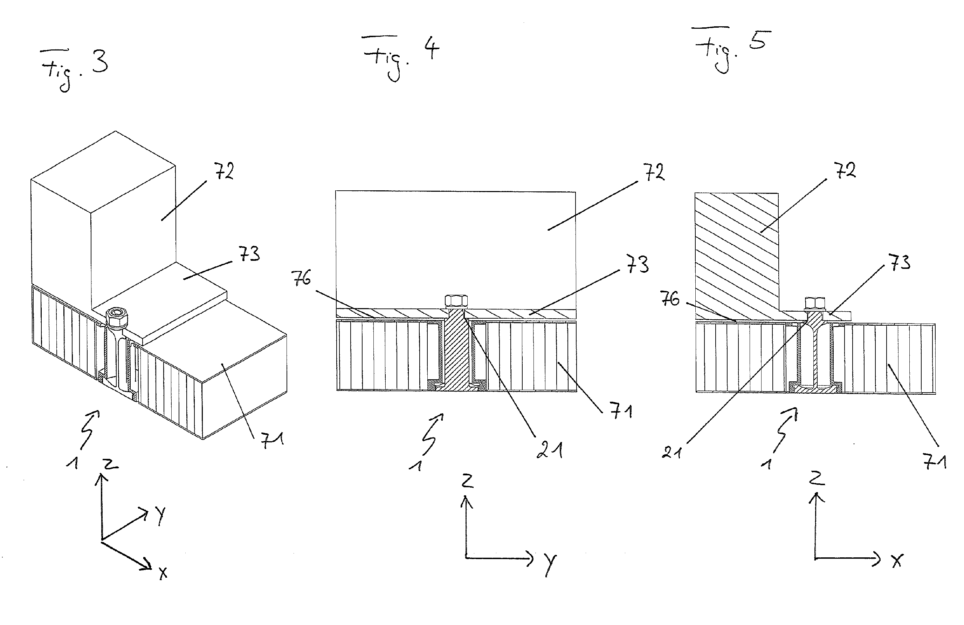

In Fig. 3 ist eine perspektivisch geschnittene Ansicht eines Panels 71 dargestellt, an dem eine abschnittsweise gezeigte Elektronikbox 72 mittels des zuvor beschriebenen erfindungsgemäßen Inserts 1 befestigt ist. Viele beispielsweise von den Weltraumbehörden wie der ESA oder der NASA qualifizierte Elektronikboxen 72 oder auch andere zu befestigende Lasten weisen in der Regel einen Befestigungsflansch 73 auf. Dieser weist Bohrungen auf, um die Elektronikbox 72 an ein Panel 71, welches beispielsweise den Grundkörper eines Satelliten ausbilden kann, zu befestigen. Ist das Panel 71 und die Elektronikbox 72 aus demselben Material angefertigt beziehungsweise weisen die beiden verwendeten Materialien einen ähnlichen oder gleichen Wärmeausdehnungskoeffizienten auf, so können für die Befestigung herkömmliche starre Inserts verwendet werden. Derartige Inserts werden auch als Gewindeeinsätze bezeichnet.

Besteht allerdings das Panel 71 aus einer CFK-Sandwich-Struktur und die Elektronikbox 72 aus Aluminium oder Titan, wie die meisten qualifizierten Elektronikboxen, so weisen diese beiden Materialien deutliche Unterschiede im Wärmeausdehnungskoeffizienten auf. Dies bedeutet, dass im Weltraumbetrieb, bei dem ein Temperaturunterschied von +250°C bis -250°C vorhanden sein kann, durch die unterschiedlichen thermischen Ausdehnungskoeffizienten Dehnungskräfte sowohl in positiver als auch in negativer Richtung entstehen. Mit anderen Worten dehnt sich beispielsweise die aus Aluminium gefertigte Elektronikbox 72 viel stärker aus als das Panel 71, welches aus CFK-Material gefertigt ist. Bei Satellliten mit geostationären Orbit werden durchschnittlich Temperaturschwankungen von +180°C bis -160°C erwartet.

Genauer betrachtet zieht sich das CFK-Material bei höheren Temperaturen sogar tendenziell eher zusammen. Die durch die unterschiedlichen Ausdehnungen entstehenden Kräfte müssen in geeigneter Weise von der Verbindung zwischen der Elektronikbox 72 und dem Panel 71 aufgefangen werden. Starre Inserts sind hierbei nicht geeignet, da sie die Kraft zwar weiterleiten, jedoch abhängig von der exakten Ausführung des Panels 71 zu einer Zerstörung des Panels führen.

Diese Problematik kann mit dem erfindungsgemäßen Insert 1 gelöst werden.

In den Figuren 4 und 5 sind jeweils Schnitte durch die in Fig. 3 dargestellte Konstruktion gezeigt.

Durch die erfindungsgemäße Konstruktion des Inserts 1 mit dem Verbindungselement 30, welches in die x-Richtung flexibel, jedoch starr in die y-Richtung ist, ist es möglich, die Ausdehnung der Elektronikbox 72 zumindest teilweise nicht auf das Panel 71 zu übertragen. Dies erfolgt derart, dass bei einer Krafteinwirkung auf die Befestigungseinrichtung 20 in x-Richtung die Verbindungseinrichtung 30 leicht in Richtung dieser Kraft ausgelenkt wird. Daher ist diese auch im Wesentlichen berührungslos innerhalb eines Innenraumes 13 des Grundkörpers 10 angeordnet.

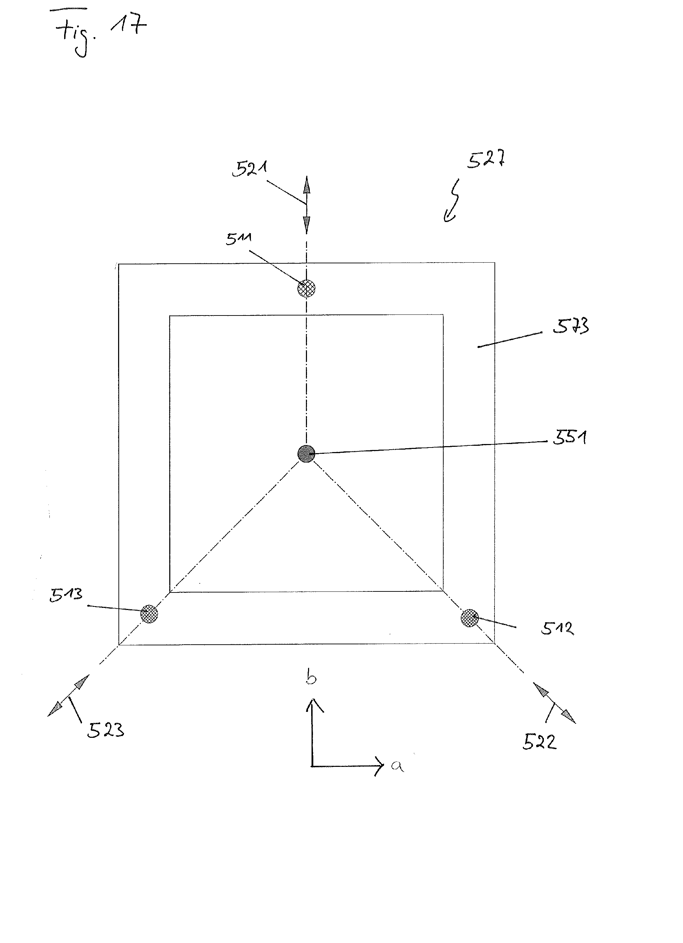

Da bei einem Start der Transportrakete, welche einen Satelliten mit dem in Figuren 3 bis 5 dargestellten Panel 71 und der angebrachten Elektronikbox 72 ins All befördert, auch Kräfte in x-Richtung wirken, welche aufgefangen werden müssen, ist es notwendig eine spezielle Befestigungsanordnung mehrerer Inserts für die Befestigung der Elektronikbox 72 vorzusehen. Diese wird später unter Bezugnahme auf Fig. 17 exemplarisch erläutert.

Um die Ausdehnung der Elektronikbox 72 gegenüber dem Panel 71 nicht durch Reiben zwischen dem Panel 72 und der Elektronikbox 72 zu beeinflussen, weist das Insert 1, wie zuvor bereits erläutert, die Stufe 21 auf. Der durch die Stufe 21 und die Oberfläche 11 des Grundkörpers 10 definierte Abstand d sorgt für einen Spalt 76 zwischen der Unterseite der Elektronikbox 72 und der Oberseite des Panels 71. Wie aus den Figuren 3, 4 und 5 ersichtlich, erstreckt sich die Befestigungseinrichtung 20, welche mit einem Außengewinde versehen ist, durch eine Öffnung im Flansch 73 der Elektronikbox 72 und ist mittels einer Mutter festgezogen. Die Unterseite des Flansches 73 liegt auf der im unteren Bereich der Befestigungseinrichtung 20 ausgebildeten Stufe 21 auf.

Um eine Wärmeübertragung von der Elektronikbox 72 auf das Panel 71 zu verbessern, kann der Spalt 76 mit einem wärmeleitenden Medium - beispielsweise eine flexible Graphitfolie - ausgefüllt werden.

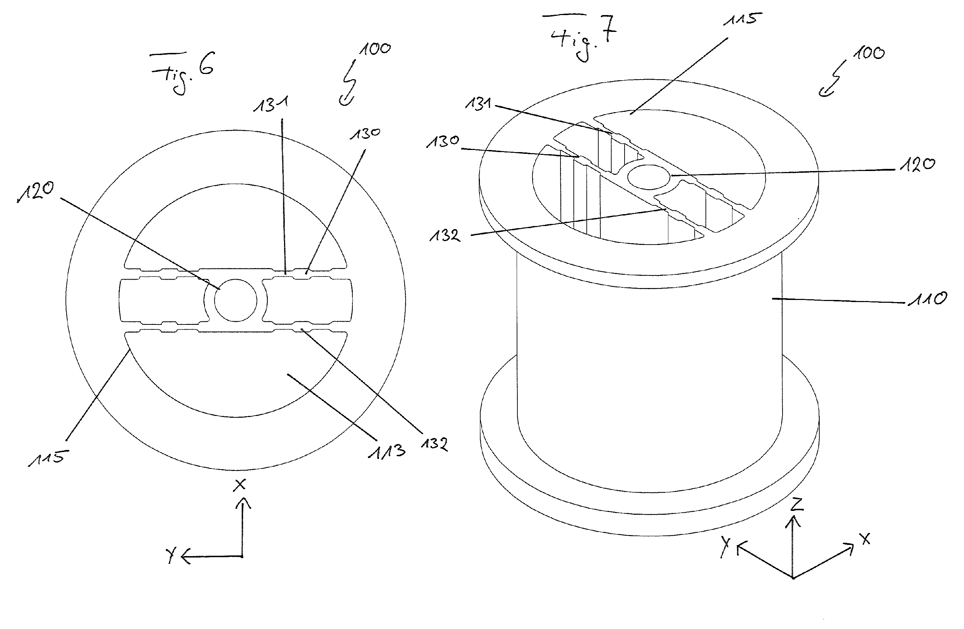

Unter Bezugnahme auf die Figuren 6 und 7 wird nun eine alternative Ausführungsform eines erfindungsgemäßen Inserts 100 beschrieben. Hierbei zeigt Fig. 6 eine Aufsicht und Fig. 7 eine perspektivische Ansicht des erfindungsgemäßen Inserts 100. Das Insert weist einen hülsenartigen Grundkörper 110 auf. Im Inneren des Grundkörpers 110 ist eine Befestigungseinrichtung 120 vorgesehen, die in dieser Ausführungsform ein Innengewinde oder eine durchgehende Bohrung aufweisen kann. In der hier dargestellten Ausführungsform des erfindungsgemäßen Inserts 100 liegt die Mittelachse der Befestigungseinrichtung 120 koaxial zur Mittelachse des Grundkörpers 100. Die Befestigungseinrichtung 120 ist mittels einer Verbindungseinrichtung 130 an dem Grundkörper 110 befestigt.

Hierbei weist die Verbindungseinrichtung 130 zwei im Wesentlichen parallel verlaufende Stege 131 und 132 auf. Diese erstrecken sich jeweils von einer Innenfläche 115 zur gegenüberliegenden Innenfläche 115 durch einen Innenraum 113 des Grundkörpers 110. Zwischen den beiden Stegen 131 und 132 ist die Befestigungseinrichtung 120 vorgesehen. Die Stege 131 und 132 erstrecken sich bevorzugt über die gesamte Höhe des Grundkörpers 110, wobei die Höhe in z-Richtung gesehen wird. Die Stege 131 und 132 können beispielsweise als zwei plattenartige Elemente ausgebildet sein, die über ihre gesamte Höhe und Länge dieselbe Dicke aufweisen. In der hier dargestellten Ausführungsform weisen die Stege 131 und 132 Bereiche mit geringerer Dicke und höherer Dicke auf. Selbstverständlich ist es nicht zwingend erforderlich, dass die Stege 131 und 132 über die gesamte Höhe mit dem Grundkörper 110 verbunden sind.

Durch die erfindungsgemäße Konstruktion des Inserts 100 ist es möglich, dass bei einer Krafteinwirkung auf die Befestigungseinrichtung 120 die Verbindungseinrichtung 130 in x-Richtung auslenkt. Mit anderen Worten kann sich die Befestigungseinrichtung 120 in x-Richtung bezüglich des Grundkörpers 110 verschieben. Demgegenüber wird bei einer Krafteinwirkung auf die Befestigungseinrichtung 120 in y-Richtung, in welcher die Stege 131 und 132 der Verbindungseinrichtung 130 verlaufen, die Kraft auf den Grundkörper 110 des Inserts 100 übertragen. Der Grundkörper 110 selbst überträgt die Kraft dann wiederum an das Material, in dem er eingebettet ist.

In der hier dargestellten Ausführungsform weisen die Stege 131 und 132 unterschiedliche Dicken über ihre Länge auf. Dies hat zur Folge, dass die ausgedünnten Stellen als Biegestellen vorgeschwächt sind und so die Auslenkung maßgeblich an den ausgedünnten Stellen vorgenommen wird. Bei einer Ausführung mit konstanter Dicke würde sich die Auslenkung über die gesamte Länge der Stege 131 und 132 vollziehen. Eine Krafteinwirkung in z-Richtung auf die Befestigungseinrichtung 120 wird direkt auf die Stege 131 und 132 übertragen, welche die Kraft wiederum auf den Grundkörper 110 des Inserts 100 übertragen. Analog zu einer Kraft in y-Richtung wird diese Kraft dann in das das Insert 100 umgebende Material eingeleitet.

Um eine Auslenkung und Bewegung in x-Richtung zu ermöglichen, ist innerhalb des Inserts 100 ein Innenraum 113 vorgesehen, in dem die Befestigungseinrichtung 120 verschoben und die Verbindungseinrichtung 130 ausgelenkt werden kann.

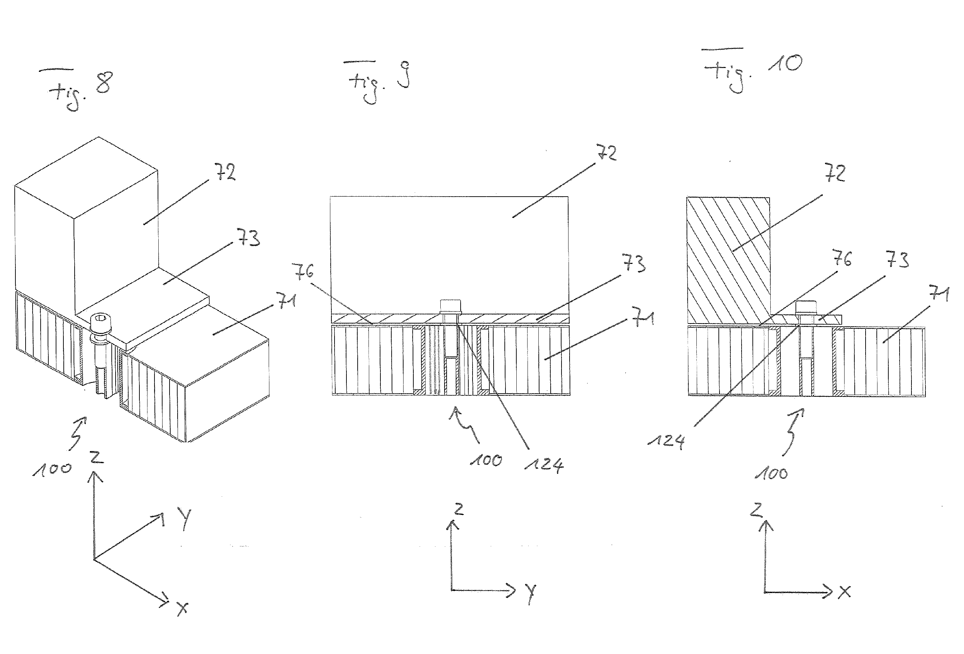

In den Figuren 8, 9 und 10 ist nun analog zu den Figuren 3, 4 und 5 die Befestigung der Elektronikbox 72 an dem Panel 71 dargestellt. Im Unterschied zu den Figuren 3, 4 und 5 ist dies in den Figuren 8, 9 und 10 mittels des Inserts 100 realisiert.

Unterschiedlich zu der Befestigung mittels des Inserts 1, welches ein Außengewinde aufweist, wird die Elektronikbox 72 in dem Insert 100 mittels einer Schraube, welche ein Außengewinde aufweist, in dem Innengewinde der Befestigungseinrichtung 120 verschraubt.

Um den Spalt 76 zwischen der Elektronikbox 72 und dem Panel 71 zu definieren, kann beispielsweise ein Abstandshalter 142 zwischen der Unterseite des Flansches 73 und der Oberseite des Inserts 100 vorgesehen werden.

Analog zu der Verwendung des Inserts 1 ist es mit dem Insert 100 auch möglich, eine Längenausdehnung der Elektronikbox in x-Richtung mittels einer Verschiebung oder Bewegung der Befestigungseinrichtung 120 in x-Richtung, welche durch die Verbindungseinrichtung 130 realisiert wird, auszugleichen. Ebenso werden Kräfte, welche auf die Befestigungseinrichtung 120 in y- oder z-Richtung wirken, mittels der Verbindungseinrichtung 130 und dem Grundkörper 110 direkt in das Panel 71 weitergeleitet.

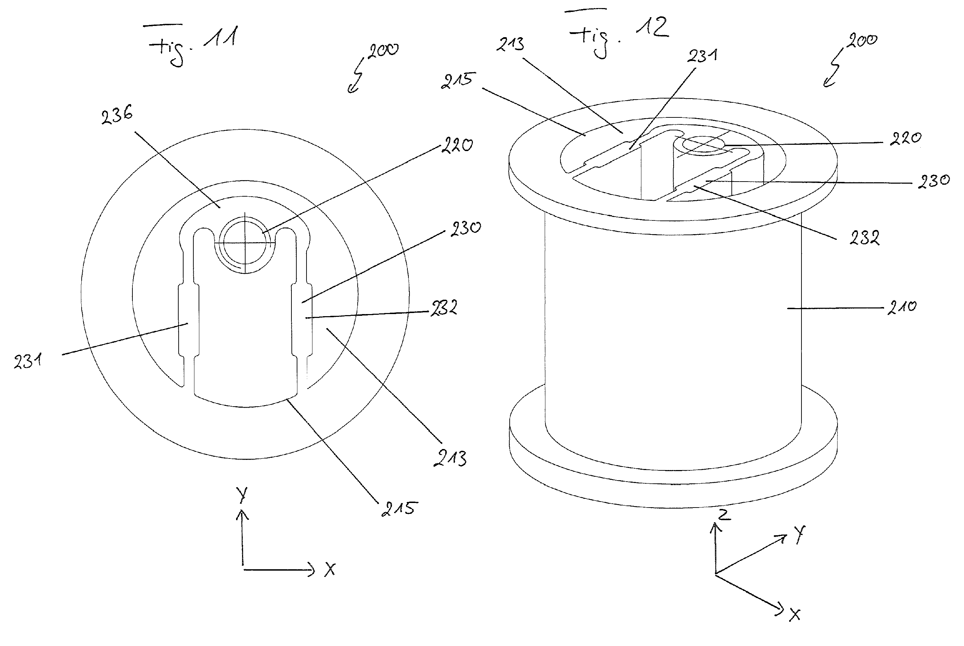

Eine andere alternative Ausführungsform eines erfindungsgemäßen Inserts 200 ist in den Figuren 11 und 12 gezeigt. Hierbei ist in Fig. 11 wiederum eine Aufsicht und in Fig. 12 eine perspektivische Ansicht auf das erfindungsgemäße Insert 200 dargestellt.

Das Insert 200 unterscheidet sich zu dem Insert 100 dadurch, dass in dieser Ausführungsform zwar die Befestigungseinrichtung 230 wiederum zwei Stege 231 und 232 aufweist, diese sich jedoch nicht von der Innenfläche 215 des Grundkörpers 210 bis auf die gegenüberliegende Innenfläche 215 erstrecken. Analog zu den Stegen 131 und 132 der Ausführungsform des Inserts 100 sind auch die Stege 231 und 232 des Inserts 200 in einigen Bereich verjüngend ausgebildet. Dies hat dasselbe Resultat wie bereits in Bezug auf das Insert 100 beschrieben, dass eine Auslenkung der Verbindungseinrichtung 230 in x-Richtung maßgeblich an den verjüngten beziehungsweise verdünnten Bereichen stattfindet. Bei einer Ausbildung der Stege 231 und 232 mit konstanter Dicke über die gesamte Länge würde die Auslenkung im Wesentlichen kontinuierlich über die gesamte Länge erfolgen.

In der hier dargestellten Ausführungsform des Inserts 200 befindet sich im Bereich der Befestigungseinrichtung 220 eine Verstärkung 236. Diese verbessert die Aufnahme von Rotationskräften, welche auf die Befestigungseinrichtung 220 beispielsweise beim Einschrauben und Anziehen einer Schraube wirken. Auf eine derartige Verstärkung 236 kann in der Konstruktion des Inserts 100 verzichtet werden, da die Stege an zwei Stellen mit dem Grundkörper verbunden sind.

Um eine Auslenkung in x-Richtung der Verbindungseinrichtung 230 zu ermöglichen, ist die Befestigungseinrichtung 220 sowie die Verbindungseinrichtung 230 bis auf die Befestigung der Stege 231 und 232 an der Innenfläche 215 des Grundkörpers 210 führungslos im Innenraum 213 vorgesehen.

Das Insert 200 überträgt wiederum Kräfte, welche auf die Befestigungseinrichtung 220 in x-Richtung wirken, nur beschränkt auf den Grundkörper 210 und somit an das den Grundkörper 210 umgebende Material. Ein Teil der Kräfte beziehungsweise Auslenkung wird durch eine Verschiebung der Befestigungseinrichtung 220 und der Verbindungseinrichtung 230 aufgenommen. Kräfte, die in y- oder z-Richtung auf die Befestigungseinrichtung 220 wirken, werden über die Verbindungseinrichtung 230 und den Grundkörper 210 in das das Insert 200 umgebende Material geleitet.

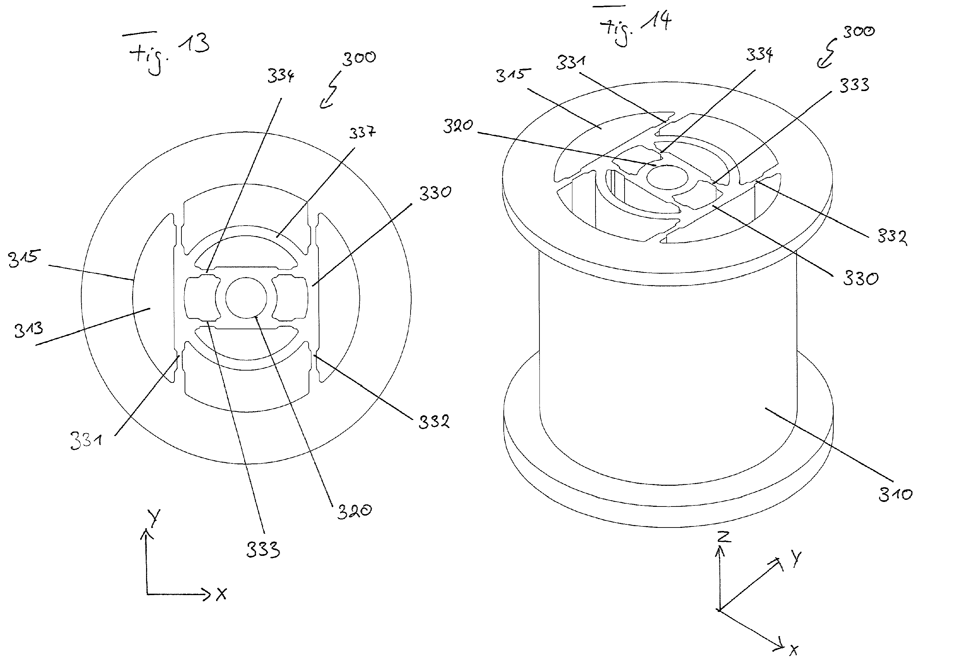

Eine weitere alternative Ausführungsform eines erfindungsgemäßen Inserts 300 ist in den Figuren 13 und 14 dargestellt. Hierbei ist in Fig. 13 wiederum eine Aufsicht und in Fig. 14 eine perspektivische Ansicht auf das erfindungsgemäße Insert 300 dargestellt.

Im Gegensatz zu den bis jetzt beschriebenen Inserts 100 und 200 ermöglicht das Insert 300 eine Bewegung einer Befestigungseinrichtung 320, welche als Innengewinde oder durchgehende Bohrung ausgebildet sein kann, sowohl in x- als auch in y-Richtung. Dies ist dadurch realisiert, dass eine Verbindungseinrichtung 330, mittels welcher die Befestigungseinrichtung 320 an einem Grundkörper 310 des Inserts 300 befestigt ist, in x- und in y-Richtung ausgelenkt werden kann. Hierzu weist die Verbindungseinrichtung 330 zwei Teilbereiche auf. Ein erster Teilbereich weist zwei Stege 331 und 332 auf, welche sich in y-Richtung erstrecken. Der zweite Teilbereich hat Stege 333 und 334, welche sich in x-Richtung erstrecken. Die Konstruktion der Stege 331, 332, 333, 334 ist ähnlich zu der der Stege 131 und 132 des Inserts 100. Hierbei erstrecken sich die Stege 331, 332 von einer Innenfläche 315 durch den Innenraum 313 des Grundkörpers 310 auf die gegenüberliegende Innenfläche 315. Im Unterschied zu dem Insert 100 ist allerdings nicht direkt die Befestigungseinrichtung 320 an den Stegen 331, 332 angeordnet, sondern wiederum ein zweites Paar Stege 333, 334, welche sich beide von dem Steg 331 zum Steg 332 erstrecken. Erst zwischen diesen weiteren Stegen 333, 334 ist die Befestigungseinrichtung 320 vorgesehen. In der hier gezeigten Ausführung ist, um eine bessere Überleitung der entstehenden Kräfte zu realisieren, zusätzlich noch ein Verstärkungsring 337 zwischen den ersten Stegen 331, 332 und den zweiten Stegen 333, 334 vorgesehen. Dieser Verstärkungsring 337 ist aber nicht zwingend erforderlich.

Bei einer Krafteinwirkung auf die Befestigungseinrichtung 320 in x-Richtung ermöglichen die Stege 331 und 332 eine Bewegung in diese Richtung. Eine Krafteinwirkung auf die Befestigungseinrichtung 320 in y-Richtung führt zu einer Auslenkung der zweiten Stege 333, 334. Lediglich eine Krafteinwirkung in z-Richtung auf die Befestigungseinrichtung 320 führt zu einer Übertragung der Kraft über die Verbindungseinrichtung 330 und den Grundkörper 320 auf das das Insert 300 umgebende Material.

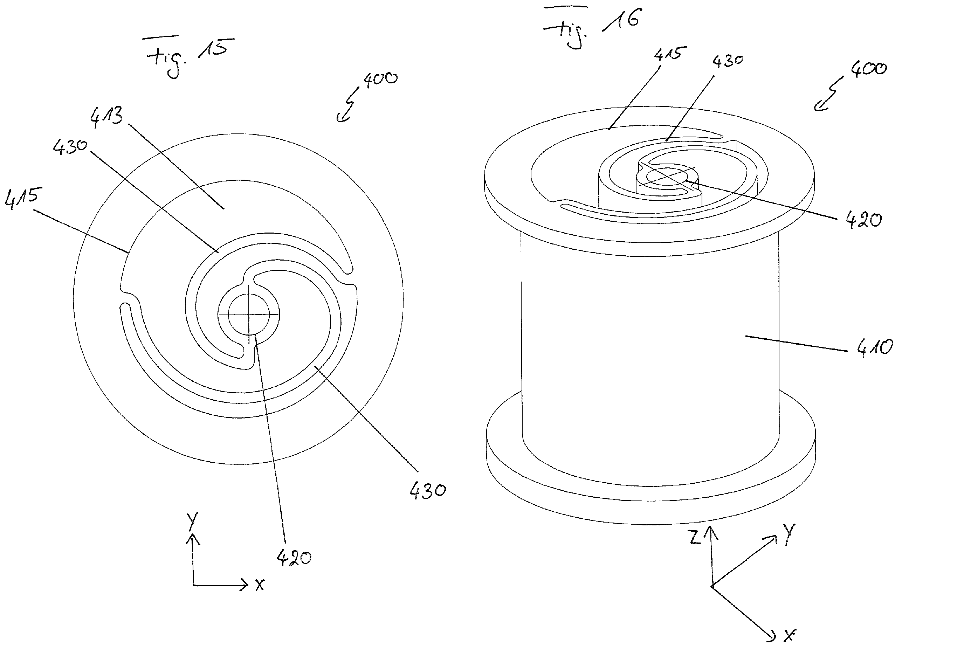

In den Figuren 15 und 16 ist eine weitere Ausführungsform eines erfindungsgemäßen Inserts 400 dargestellt. Hierbei ist in Fig. 15 wiederum eine Aufsicht und in Fig. 16 eine perspektivische Ansicht des erfindungsgemäßen Inserts 400 gezeigt.

In einem Innenraum 413 des Grundkörpers 410 befindet sich wiederum eine Befestigungseinrichtung 420. Diese ist mittels einer Verbindungseinrichtung 430, welche sich von den Innenflächen 415 zur Befestigungseinrichtung 420 erstreckt, befestigt. Im Gegensatz zu den Ausführungsformen der Inserts 100, 200 und 300 verlaufen die Stege, welche ein Teil der Verbindungseinrichtung 430 sind, hier nicht in gerader Linie, sondern bilden eine spiralartige Struktur aus. Sie erstrecken sich jedoch auch wiederum über im Wesentlichen die gesamte Höhe des Grundkörpers 410. Die Befestigungseinrichtung 420 kann wiederum als durchgehende Bohrung oder Innengewinde ausgebildet sein. Mit der hier dargestellten Konstruktion wird eine Verschiebung der Befestigungseinrichtung 420 sowohl in x-Richtung als auch in y-Richtung ermöglicht. Kräfte, die in z-Richtung auf die Befestigungseinrichtung 420 wirken, können wieder über die Verbindungseinrichtung 430 und den Grundkörper 410 auf das das Insert 400 umgebende Material geleitet werden.

Unter Bezugnahme auf Fig. 17 wird nun die Befestigungsauslegung einer Elektronikbox 527 auf einem Panel mittels mehrerer erfindungsgemäßer Inserts, welche zumindest bereichsweise in eine Raumrichtung beweglich sind, erläutert.

In Fig. 17 ist eine stark vereinfachte Aufsicht auf eine Elektronikbox 527 gezeigt, welche auf einem Panel befestigt ist. Hierbei ist das Panel aus Übersichtlichkeitsgründen nicht dargestellt. Die Elektronikbox 527 weist einen Flansch 573 auf. In dem Flansch 573 sind an drei Stellen Durchgangsbohrungen vorgesehen, mittels derer die Elektronikbox 527 mit erfindungsgemäßen Inserts an dem Panel befestigt ist. Bei der hier dargestellten Befestigungsauslegung werden Inserts verwendet, welche in eine Raumrichtung beweglich sind.

Das an Stelle 511 vorgesehene Insert ist in die durch die Pfeile 521 angedeutete Richtung zu einer Auslenkung das heißt zu einer Bewegung oder Verschiebung der Befestigungseinrichtung fähig. Analog ist das Insert an Stelle 512 zu einer Auslenkung in die Richtung 522 ausgelegt und das Insert an Stelle 513 zu einer Auslenkung in die Richtung 523.

Hierbei sind die Inserts so angeordnet, dass sich die Richtungen 521, 522, 523, in welche sie auslenkbar sind, in einem Punkt 551, welcher in dieser Ausführungsform der Mittelpunkt der Elektronikbox 527 ist, treffen. Es ist aber nicht zwingend erforderlich, dass es sich hierbei um den Mittelpunkt handelt. Es muss sich lediglich um einen Punkt handeln, der bevorzugt innerhalb der Umfangsfläche des zu befestigenden Körpers, beispielsweise der Elektronikbox 527, liegt.

Eine derartige Auslegung ist notwendig, damit zum einen die im Weltraumbetrieb erforderlichen Ausdehnungen über die Auslenkung der Inserts beziehungsweise einer Verschiebung der Befestigungseinrichtungen abgefangen werden können, zum anderen jedoch auch die auf den Satelliten und somit die Elektronikbox 527 einwirkenden Startkräfte durch die Inserts aufgenommen beziehungsweise in das Panel weitergeleitet werden können.

Wirkt beispielsweise beim Start eine Kraft in Richtung b, erfolgt eine Auslenkung des Inserts an Stelle 511 in 521, bis keine weitere Auslenkung mehr möglich ist. In ähnlicher Weise lenken die Inserts an Stellen 512 und 513 leicht in ihre entsprechenden Auslenkungsrichtungen 522 und 523 aus und übertragen die restlichen Kräfte in das Panel. Als Auslenkung eines Inserts kann im Sinne der Erfindung die Verschiebung oder Bewegung der Befestigungseinrichtung durch die Auslenkung der Verbindungseinrichtung verstanden werden.

In ähnlicher Weise erfolgt dies bei einer Kraft beim Start in Richtung a. Hierbei lenken die Inserts an Stellen 512 und 513 jeweils leicht in ihre Auslenkungsrichtung 522 und 523 aus, wohingegen das Insert an Stelle 512 zu keiner Auslenkung fähig ist.

Im Weltraumbetrieb, wenn sich die Elektronikbox 527 beispielsweise ausdehnt, erfolgt die Ausdehnung gesehen vom zentralen Punkt 551 gleichmäßig in jede Richtung. Das bedeutet, dass alle Inserts an den Stellen 511, 512 und 513 sich in ihre jeweilige Auslenkungsrichtung 521, 522 und 523 auslenken, ohne die durch die Dehnung entstehenden Kräfte komplett auf das Panel zu übertragen.

Zwar wurde in der zuvor stehenden Beschreibung das Insert als standardmäßig im Panel eingebettet beschrieben, jedoch ist es auch möglich, das Insert in dem zu befestigenden Objekt vorzusehen.

Mit dem erfindungsgemäßen Insert ist es somit möglich, speziell für Weltraumanwendungen Objekte aus Materialien, welche einen deutlich unterschiedlichen Wärmeausdehnungskoeffizienten aufweisen, miteinander zu verbinden und sowohl die beim Startvorgang der Beförderungsrakete wie auch im Betriebszustand auftretenden Kräfte in geeigneter Weise aufzunehmen oder zu übertragen.

## Patentansprüche

1. Insert (1, 100, 200, 300, 400) für Verbindungen zwischen zwei Körpern (71, 72) mit unterschiedlichen Wärmeausdehnungskoeffizienten mit einem hülsenartigen Grundkörper (10, 110, 210, 310, 410), welcher eine Mittelachse in einem Innenraum (13, 113, 213, 313, 413) aufweist und wobei eine Befestigungseinrichtung (20, 120, 220, 320, 420), insbesondere ein Gewinde, vorgesehen ist, welche mit dem Grundkörper (10, 110, 210, 310, 410) verbunden ist,
**dadurch gekennzeichnet,**
**dass** die Verbindung zwischen dem Grundkörper (10, 110, 210, 310, 410) und der Befestigungseinrichtung (20, 120, 220, 320, 420) mittels einer zumindest teilweise innerhalb des Grundkörpers (10, 110, 210, 310, 410) angeordneten Verbindungseinrichtung (30, 130, 230, 330, 430) ausgebildet ist,
**dass** die Verbindungseinrichtung (30, 130, 230, 330, 430) mittels einer definierten Minimalkraft in eine erste Raumrichtung (x) auslenkbar ist, wobei sich die erste Raumrichtung (x) etwa senkrecht zur Mittelachse erstreckt und
**dass** die Befestigungseinrichtung (20, 120, 220, 320, 420) beim Auslenken der Verbindungseinrichtung (30, 130, 230, 330, 430) in die Raumrichtung (x) bewegt wird.

2. Insert nach Anspruch 1,
**dadurch gekennzeichnet,**
**dass** die Befestigungseinrichtung (30, 130, 230, 330, 430) eine durchgehende Hülse, ein Außengewinde oder ein Innengewinde aufweist, welche eine Mittelachse aufweisen, welche parallel oder koaxial zur Mittelachse des Grundkörpers (10, 110, 210, 310, 410) ausgerichtet ist.

3. Insert nach Anspruch 1 oder 2,
**dadurch gekennzeichnet,**
**dass** die Verbindungseinrichtung (30) länglich mit einem ersten (31) und einem zweiten (32) Ende ausgebildet ist,
**dass** die Verbindungseinrichtung (30) mit ihrem ersten Ende (31) in einem unteren Bereich des Grundkörpers (10) mit diesem verbunden ist und dass sich die Verbindungseinrichtung (30) von dem unteren Bereich des Grundkörpers (10) bis zu einem oberen Bereich in den Innenraum (13) des Grundkörpers (10) erstreckt, wobei im oberen Bereich des Innenraums (13) des Grundkörpers das zweite Ende (32) der Verbindungseinrichtung (30) vorgesehen ist.

4. Insert nach Anspruch 3,
**dadurch gekennzeichnet,**
**dass** sich die Verbindungseinrichtung (30) berührungslos zum Grundkörper (10) vom unteren Bereich des Grundkörpers (10) aus parallel oder koaxial zur Mittelachse erstreckt.

5. Insert nach Anspruch 3 oder 4,
**dadurch gekennzeichnet,**
**dass** an dem zweiten Ende (32) der Verbindungseinrichtung (30) die Befestigungseinrichtung (20) ausgebildet ist.

6. Insert nach einem der Ansprüche 1 bis 5,
**dadurch gekennzeichnet,**
**dass** die Verbindungseinrichtung (30) eine plattenartige längliche Form aufweist und
**dass** die erste Raumrichtung (x) etwa senkrecht zu den Seitenflächen (33) der Verbindungseinrichtung (30) verläuft.

7. Insert nach Anspruch 1 oder 2,
**dadurch gekennzeichnet,**
**dass** die Verbindungseinrichtung (130, 230, 330, 430) stegartig zwischen der Befestigungseinrichtung (120, 220, 320, 420) und einer Innenfläche (115, 215, 315, 415) des Grundkörpers (110, 210, 310, 410) ausgebildet ist.

8. Insert nach einem der Ansprüche 1, 2 oder 7,
**dadurch gekennzeichnet,**
**dass** die Verbindungseinrichtung (430) spiralartig zwischen der Befestigungseinrichtung (420) und einer Innenfläche (415) des Grundkörpers (410) ausgebildet ist.

9. Insert nach einem der Ansprüche 1, 2 oder 7,
**dadurch gekennzeichnet,**
**dass** die Verbindungseinrichtung (130, 230, 330) zwei im Wesentlichen parallele Stege (131, 132, 231, 232, 331, 332, 333, 334) aufweist und
**dass** die Befestigungseinrichtung (120, 220, 320) zwischen den beiden Stegen (131, 132, 231, 232, 331, 332, 333, 334) vorgesehen ist.

10. Insert nach einem der Ansprüche 1, 2, 7 oder 9,
**dadurch gekennzeichnet,**
**dass** sich die Verbindungseinrichtung (130, 330) von einer Seite der Innenfläche (115, 315) des Grundkörpers (110, 310) zur gegenüberliegenden Seite erstreckt.

11. Insert nach einem der Ansprüche 1, 2, 7, 9 oder 10,
**dadurch gekennzeichnet,**
**dass** sich die Verbindungseinrichtung (130, 230, 330) von einer Innenfläche (115, 215, 315) des Grundkörpers zur Befestigungseinrichtung (120, 220, 320) in eine zweite Raumrichtung (y) erstreckt, wobei die zweite Raumrichtung (y) etwa senkrecht zur Mittelachse verläuft und
**dass** die erste Raumrichtung (x) etwa senkrecht zur zweiten Raumrichtung (y) verläuft.

12. Insert nach einem der Ansprüche 1, 2, 7, 9 oder 10,
**dadurch gekennzeichnet,**
**dass** die Verbindungseinrichtung (330) zwei Bereiche aufweist,
**dass** sich ein erster Bereich der Verbindungseinrichtung von einer Innenfläche (315) des Grundkörpers (310) in den Innenraum (313) in eine zweite Raumrichtung (y) erstreckt,
**dass** die zweite Raumrichtung (y) etwa senkrecht zur Mittelachse verläuft,
**dass** der erste Bereich der Verbindungseinrichtung (330) in die erste Raumrichtung (x) auslenkbar ist, welche etwa senkrecht zur Mittelachse und etwa senkrecht zur zweiten Raumrichtung (y) verläuft,
**dass** sich ein zweiter Bereich der Verbindungseinrichtung (330) von dem ersten Bereich zur Befestigungseinrichtung (320) in die erste Raumrichtung (x) erstreckt und in die zweite Raumrichtung (y) auslenkbar ist.

13. Insert nach einem der Ansprüche 1 bis 12,
**dadurch gekennzeichnet,**
**dass** die Befestigungseinrichtung (20) aus dem Grundkörper (10) hervorstehend ausgebildet ist.

14. Insert nach einem der Ansprüche 1 bis 13,
**dadurch gekennzeichnet,**
**dass** an der Befestigungseinrichtung (20) eine Stufe (21) vorgesehen ist, welche einen Anschlag ausbildet, der einen Abstand (d) zwischen einer oberen Fläche (11) des Grundkörpers (10) und der Stufe (21) in axialer Richtung der Mittelachse definiert.

15. Verbundmaterialpanels für Satelliten
**gekennzeichnet durch**
mindestens ein Insert (1, 100, 200, 300, 400) nach einem der Ansprüche 1 bis 14.
